# EUROPÄISCHE PATENTANMELDUNG

(11) **EP 0 924 882 A1**
(43) Veröffentlichungstag der Anmeldung: **23.06.1999**
(21) Anmeldenummer: 97440132.5
(22) Anmeldetag: 15.12.1997
(51) Int. Cl.: H04B 10/17, H01S 3/06

(54) **Optischer Verstärker für Signale einer grossen Bandbreite und optisches Übertragungssystem mit einem solchen optischen Verstärker**

(71) Anmelder: ALCATEL, 75008 Paris (FR)
(72) Erfinder: Pfeiffer, Thomas, Dr., 70569 Stuttgart (DE)
(74) Vertreter: Knecht, Ulrich Karl, Dipl.-Ing.

(57) **Zusammenfassung**

Es ist ein optischer Verstärker angegeben, der einen aktiven Lichtwellenleiter (1), mindestens eine Pumplichtquelle (3), mindestens einen Koppler (2) und erfindungsgemäß einen zweiten Lichtwellenleiter (4) hat. Der zweite Lichtwellenleiter (4) ist in Ausbreitungsrichtung des Signallichts vor oder nach dem aktiven Lichtwellenleiter (1) angeordnet ist und ist mit dem gleichen Seltenerdelement dotiert, wie der aktive Lichtwellenleiter (1). Dem zweiten Lichtwellenleiter (4) ist nur Signallicht zuführbar.

## Beschreibung

Die Erfindung betrifft einen optischen Verstärker gemäß dem Oberbegriff des Anspruchs 1. Außerdem betrifft die Erfindung ein optisches Übertragungssystem gemäß dem Oberbegriff des Anspruchs 5 oder Anspruchs 6.

Ein optischer Verstärker mit den im Oberbegriff des Anspruchs 1 angegeben Merkmalen ist z. B. aus der Patentschrift EP-B1-0 550 145 bekannt. Die Patentschrift befaßt sich mit einem rauscharmen optischen Verstärker, dem ein Verlustelement nachgeschaltet ist. Als Beispiele für optische Verstärker sind ein optischer Halbleiterverstärker und ein faseroptischer Verstärker genannt, die in optischen Übertragungssystemen, dazu dienen, in Lichtwellenleitern geführte optische Signale zu verstärken. Die Lichtwellenleiter bilden ein zwischen einem optischen Sender und einem optischen Empfänger bestehendes Lichtwellenleiternetz.

Es ist ein faseroptischer Verstärker angegeben, der eine mit einem Seltenerdelement (z. B. Erbium) dotierte aktive Faser, eine Pumplichtquelle und einen Koppler hat. Durch den Koppler wird von der Pumplichtquelle ausgesendetes Pumplicht der aktiven Faser zugeführt, um diese optisch zu pumpen. Der aktiven Faser kann das Pumplicht auf verschiedene Weise zugeführt werden: in Ausbreitungsrichtung des optischen Signals (co-directional pumping), entgegen der Ausbreitungsrichtung des optischen Signals (contra-directional pumping) oder in und entgegen der Ausbreitungsrichtung des optischen Signals (bi-directional pumping).

Für optische Halbleiterverstärker ist angegeben, daß diese elektrisch gepumpt werden, um dem optischen Halbleiterverstärker Energie zuzuführen.

Als Eingangssignal wird dem faseroptischen Verstärker ein optisches Signal zugeführt, das durch einen bekannten Verstärkungsmechanismus in der aktiven Faser verstärkt wird. Aus dem faseroptischen Verstärker tritt ein Ausgangssignal aus, das dem Verlustelement zugeführt wird. Das Verlustelement kann ein passives oder aktives optisches Element sein, z. B. ein Faserkoppler. Es ist angegeben, daß das Verlustelement vorzugsweise ein passives optisches Element ist, das keine nichtlinearen Eigenschaften hat. Mit Hilfe dieses Verlustelements wird erreicht, daß sich vor allem die verstärkte stimulierte Emission ASE weniger auf die Rauscheigenschaften auswirken.

Von faseroptischen Verstärkern, z. B. von mit Erbiumionen dotierten faseroptischen Verstärkern (EDFA) ist bekannt, daß das optische Spektrum des Ausgangssignals vom optischen Spektrum und der optischen Leistung des Eingangssignals abhängig ist. Bei der Verstärkung eines Eingangssignals, das eine hohe Bandbreite (z. B. eine Halbwertsbreite Δλ > 30 nm) hat, ändert sich die Form des optischen Spektrums des Ausgangssignals. Außerdem ist die Verstärkung (Verstärkungsfaktor] des faseroptischen Verstärkers sehr von der optischen Leistung des Eingangssignals abhängig.

Eine solche Abhängigkeit des optischen Spektrums des Ausgangssignals vom Eingangssignal ist für einige Anwendungsgebiete von faseroptischen Verstärkern unerwünscht. Solche Anwendungsgebiete sind z. B. bekannte WDM Systeme und optische CDMA Systeme; ein optisches CDMA System ist z. B. aus L. Möller, "An Optical CDMA Method Based on Periodic Spectrum Encoding", Proceedings of the Thirteenth Annual Conference on European Fibre Optic Communications and Networks, Brighton, England, 1995, Seiten 178 bis 181 bekannt.

Der Erfindung liegt die Aufgabe zugrunde, einen optischen Verstärker anzugeben, bei dem die Abhängigkeit des optischen Spektrums des Ausgangssignals vom Eingangssignal minimiert ist. Ein die Aufgabe lösender optischer Verstärker ist Gegenstand des Anspruchs 1. Der Erfindung liegt außerdem die Aufgabe zugrunde, ein optisches Übertragungssystem mit einem solchen optischen Verstärker anzugeben. Ein optisches Übertragungssystem ist Gegenstand des Anspruchs 5. Ein weiteres optisches Übertragungssystem ist Gegenstand des Anspruchs 6. Vorteilhafte Ausgestaltungen der Erfindung sind in den Unteransprüchen angegeben.

Ein Vorteil der Erfindung ist, daß der Dynamikbereich eines optischen Verstärkers wesentlich erhöht wird; für einen großen Bereich des Leistungspegels des Eingangssignals wird eine nahezu konstante wellenlängenunabhängige Verstärkung erzielt.

Ein weiterer Vorteil der Erfindung ist, daß im faseroptischen Verstärker keine zusätzliche elektronische Regelung erforderlich ist. Desweiteren ist es von Vorteil, daß bereits in ein optisches Übertragungssystem installierte faseroptische Verstärker auf eine einfache Weise aufgewertet werden können, um optische Signale zu verstärken, die eine hohe Bandbreite haben.

Die Erfindung wird im folgenden anhand von Zeichnungen näher erläutert. Es zeigen:
- Fig. 1: ein schematisch gezeigtes Ausführungsbeispiel eines faseroptischen Verstärker und
- Fig. 2: ein schematisches optisches Übertrogungssystem mit einem faseroptischen Verstärkers.

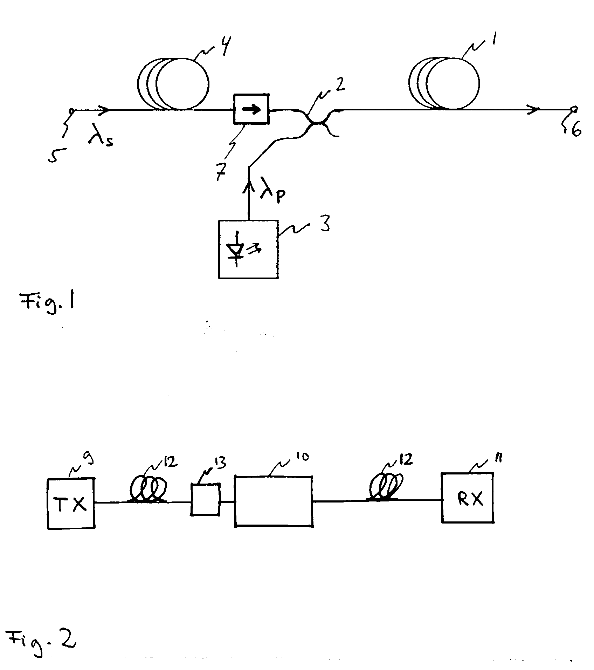

In Fig. 1 ist als Beispiel für einen optischen Verstärker ein faseroptischer Verstärker gezeigt, der eine aktive Faser 1, einen Koppler 2, eine Pumplichtquelle 3, einen optischen Isolator 7 und eine Faser 4 hat. Einem Eingang 5 des faseroptischen Verstärkers wird als Eingangssignal ein optisches Signal zugeführt, das verstärkt an einem Ausgang 6 des faseroptischen Verstärkers austritt. Die aktive Faser 1 und die Faser 4 sind durch den Koppler 2 miteinander so verbunden, daß das optische Signal der Wellenlänge λ_{S} von links nach rechts zuerst durch die Faser 4 und dann durch die aktive Faser 1 läuft. Daran anschließend tritt das verstärkte optische Signal am Ausgang 6 aus dem faseroptischen Verstärker aus. Von der Pumplichtquelle 3 ausgesendetes Pumplicht der Wellenlänge λ_{P} wird durch den Koppler 3 so in die aktive Faser 1 eingekoppelt, daß es sich in der aktiven Faser 1 in Richtung des optischen Signals ausbreitet (co-directional pumping).

Das Pumplicht kann auch entgegen der Ausbreitungsrichtung (contradirectional pumping) des optischen Signals oder in und entgegen der Ausbreitungsrichtung des optischen Signals (bi-directional pumping) zugeführt werden. Im letztgenannten Fall sind zwei Pumplichtquellen und zwei Koppler vorhanden. Beim Zuführen von Pumplicht entgegen der Richtung des optischen Signal ist jedoch darauf zu achten, daß der Faser 4 kein Pumplicht zugeführt wird. Mit Hilfe eines optischen Isolators oder eines optischen Filters kann z. B. verhindert werden, daß Pumplicht, das sich entgegen der Richtung des optischen Signals ausbreitet, in die Faser 4 eintritt. Die Faser 4 wird demnach nicht gepumpt.

In Fig. 1 ist der optische Isolator 7 zwischen der Faser 4 und dem Koppler 2 angeordnet. Der optische Isolator 7 sperrt Licht, das sich entgegen der Ausbreitungsrichtung des optischen Signals ausbreitet, dazu gehört auch Licht, das von der verstärkten spontanen Emission herrührt.

Der Grundgedanke der Erfindung ist, daß in Ausbreitungsrichtung des optischen Signals vor oder hinter der aktiven Faser 1 ein optisches Dämpfungsglied angeordnet ist, das eine wellenlängenabhängige nichtlineare Absorptionseigenschaft hat und daß dem optischen Dämpfungsglied nur das optische Signal zuführbar ist. Das Dämpfungsglied ist in Fig. 1 die Faser 4. Je höher die optische Leistung des optischen Signals ist, desto höher ist die Absorption von Licht in der Faser 4; dieser Zusammenhang ist nichtlinear.

Die Faser 4 ist mit dem gleichen Seltenerdelement dotiert, wie die aktive Faser 1, d. h. im vorliegenden Fall ebenfalls mit Erbiumionen. Die Faser 4 absorbiert somit einen Teil der optischen Leistung des optischen Signals; sie wirkt als Dämpfungsfaser (Dämpfungsglied), deren Dämpfung u. a. von der Faserlänge und der Konzentration der Erbiumionen abhängig ist.

Gemäß dem Grundgedanken der Erfindung werden durch die Faser 4 diejenigen Wellenlängenbereiche des optischen Signals am stärksten gedämpft, die in der aktiven Faser 1 die höchste Verstärkung erfahren würden. Dadurch wird ein ausgeglicheneres optisches Spektrum des verstärkten optischen Signals erzielt.

Die Beschreibung des erfindungsgemäßen optischen Verstärkers erfolgte anhand eines faseroptischen Verstärkers. Die Erfindung kann aber auch bei einem optischen Halbleiterverstärker und einem optischen Verstärker angewendet werden, der in integriertoptischer Ausführung vorliegt, d. h. die Lichtwellenleiter sind in einem Substrat integriert.

Es ist außerdem anzumerken, daß die Beschreibung der Erfindung anhand eines faseroptischen Verstärkers erfolgte, bei dem die Faser 4 Teil des faseroptischen Verstärkers ist. Es gibt jedoch auch eine Definition von faseroptischen Vestärkern, bei der nur die aktive Faser 1, der Koppler 2, die Pumplichtquelle 3 und evtl. eine Steuerelektronik Teil des faseroptischen Verstärkers sind. In diesem Fall ist die Erfindung so zu verstehen, daß die Faser 4 vor dem faseroptischen Verstärker angeordnet ist.

Ein Beispiel für diesen Fall ist in dem in Fig. 2 gezeigten optischen Übertragungssystems dargestellt, das schematisch als Punkt-zu-Punkt Verbindung gezeigt ist. Ein optischer Sender 9 und ein optischer Empfänger 11 sind an ein Lichtwellenleiternetz 12 angeschlossen, in das ein optischer Verstärker 10 eingefügt ist. Der optische Sender sendet Licht aussendet, das z. B. eine Wellenlänge λ_{S} von ca. 1,5 µm hat. Sind im optischen Übertragungssystems mehrere optische Sender vorhanden, ist das optische Signal ein Gemisch aus Licht, das von unterschiedlichen optischen Sendern ausgesendet wird. In der vorliegenden Beschreibung der Erfindung wird auch ein solches Gemisch als optisches Signal bezeichnet, das eine Wellenlänge λ_{S} hat. Der Bereich der Wellenlänge λ_{S} ist dabei jedoch so gewählt, daß er im Bereich der Verstärkung eines faseroptischen Verstärkers liegt, bei dem die Wellenlänge λ_{P} des Pumplichts bei ca. 0,98 µm liegt.

In Ausbreitungsrichtung des optischen Signals ist vor dem optischen Verstärker 10 ein Dämpfungsglied 13 angeordnet, das z. B. die in Fig. 1 gezeigte Faser 4 ist. Das Dämpfungsglied 13 kann auch nach dem optischen Verstärker 10 angeordnet sein. Der optische Verstärker 10 kann z. B. ein faseroptischer Verstärker sein, der z. B. in einem bereits installiertem optischen Übertragungssystem vorhanden ist. Durch Einfügen des Dömpfungsgliedes 13 in das Lichtwellenleiternetz 12, vor oder hinter dem optischen Verstärker 10, wird eine einfache Erweiterung des optischen Verstärker erzielt, d. h. das optische Übertragungssystem wird aufgewertet, so daß optische Signale übertragen werden können, die eine hohe Bandbreite haben.

Durch die Erfindung wird erreicht, daß das optische Spektrum des Ausgangssignals eines optischen Verstärkers nahezu unabhängig vom optischen Spektrum und der optischen Leistung des Eingangssignal ist. Damit kann ein optisches Übertrgagungssystem geschaffen werden, in dem optische Signale übertragen werden können, die eine hohe Bandbreite haben.

## Patentansprüche

1. Optischer Verstärker, mit einem aktiven Lichtwellenleiter (1), der ein ihm zuführbares optisches Signal verstärkt, und mit einer Einrichtung (2, 3), um dem aktiven Lichtwellenleiter (1) Energie zuführen zu können, wobei
in Ausbreitungsrichtung des optischen Signals vor oder hinter dem aktiven Lichtwellenleiter (1) ein optisches Dämpfungsglied (4) angeordnet ist, dadurch gekennzeichnet, daß das Dämpfungsglied (4) eine wellenlängenabhängige nichtlineare Absorptionseigenschaft hat, und daß dem optischen Dämpfungsglied (4) nur das optische Signal zuführbar ist.

2. Optischer Verstärker nach Anspruch 1, bei dem das optische nichtlineare Dämpfungsglied (4) ein Lichtwellenleiter (4) ist, der mit dem gleichen Seltenerdelement dotiert ist, wie der aktive Lichtwellenleiter (1).

3. Optischer Verstärker nach Anspruch 2, bei dem die Dämpfung des Lichtwellenleiters (4) durch die Länge des Lichtwellenleiters (4) und die Konzentration des Seltenerdelements einstellbar ist.

4. Optischer Verstärker nach einem der vorhergehenden Ansprüche, bei dem Mittel (7) vorhanden sind, die zwischen dem aktiven Lichtwellenleiter (1) und dem optischen Dämpfungsglied (4) so angeordnet sind, daß sie Pumplicht und/oder Licht sperren, das sich entgegen der Ausbreitungsrichtung des optischen Signals ausbreitet.

5. Optischer Verstärker nach Anspruch 4, bei dem die Mittel ein optischer Isolator oder ein optisches Filter sind.

6. Optisches Übertragungssystem, bei dem mindestens ein optischer Sender (9) und mindestens ein optischer Empfänger (10) an ein Lichtwellenleiternetz (12) angeschlossen sind, bei dem mindestens ein optischer Verstärker (10) in das Lichtwellenleiternetz (12) eingefügt ist, bei dem der mindestens eine optische Verstärker (10) einen aktiven Lichtwellenleiter (1), der ein ihm zuführbares optisches Signal verstärkt, und eine Einrichtung (2, 3) hat, um dem aktiven Lichtwellenleiter (1) Energie zuführen zu können,
daß der mindestens eine faseroptische Verstärker (10) ein optisches Dämpfungsglied (4) hat, das in Ausbreitungsrichtung des optischen Signals vor oder hinter dem aktiven Lichtwellenleiter (1) angeordnet ist und das eine wellenlängenabhängige nichtlineare Absorptionseigenschaft hat, und daß dem optischen Dämpfungsglied (4) nur das optische Signal zuführbar ist.

7. Optisches Übertragungssystem, bei dem mindestens ein optischer Sender (9) und mindestens ein optischer Empfänger (11) an ein Lichtwellenleiternetz (12) angeschlossen sind, bei dem mindestens ein optischer Verstärker (10) in das Lichtwellenleiternetz (12) eingefügt ist, bei dem der mindestens eine optische Verstärker (10) einen aktiven Lichtwellenleiter (1), der ein ihm zuführbares optisches Signal verstärkt, und eine Einrichtung (2, 3) hat, um dem aktiven Lichtwellenleiter (1) Energie zuführen zu können,
dadurch gekennzeichnet,
daß in Ausbreitungsrichtung des optischen Signals vor oder hinter dem mindestens einen optischen Verstärker ein optisches Dämpfungsglied (4) angeordnet ist, das eine wellenlängenabhängige nichtlineare Absorptionseigenschaft hat, und daß dem optischen Dämpfungsglied (4) nur das optische Signal zuführbar ist.

8. Optisches Übertragungssystem nach Anspruch 5 oder 6, bei dem Mittel (7) vorhanden sind, die zwischen dem mindestens einen optischen Verstärker dem optischen Dämpfungsglied (4) so angeordnet sind, daß sie Pumplicht und/oder Licht sperren, das sich entgegen der Ausbreitungsrichtung des optischen Signals ausbreitet.
